# EUROPEAN PATENT SPECIFICATION

(11) **EP 0 776 431 B1**
(45) Date of publication and mention of the grant of the patent: **22.04.1998**
(21) Application number: 95929781.3
(22) Date of filing: 22.08.1995
(51) Int. Cl.: F16F 15/22, B63H 21/30

(54) **VIBRATION-COMPENSATING APPARATUS**
SCHWINGUNGSKOMPENSIERENDE VORRICHTUNG
DISPOSITIF DE COMPENSATION DE VIBRATIONS

(30) Priority: 24.08.1994 DK 97894
(43) Date of publication of application: 04.06.1997
(73) Proprietor: F.L. Smidth & Co. A/S, 2500 Valby (DK)
(72) Inventor: MADSEN, John, Gram, DK-2200 Copenhagen N (DK)
(74) Representative: Jensen, Peter Kim
(86) International application number: DK9500340
(87) International publication number: WO9606290

(56) References cited:
- EP-A- 10 973
- EP-A- 348 081
- EP-A- 409 462
- WO-A-95/02133
- DE-C- 292 711
- DE-C- 627 949
- DK-B- 169 848
- Patent Abstracts of Japan,vol 7, No. 81, M-205, & JP-A -58 8844 (MITSUBUSHI JUKOGYO K.K.) 19. JANUARY 1983

## Description

### Technical Field

The invention relates to a vibration-compensating apparatus for counteracting harmonic vibrations from an excitation source, such as vibrations generated by an engine of a vessel, said vibration-compensating apparatus comprising a first compensator unit with two rotary bodies with the same eccentric mass and rotating at the same rpm in opposite direction about mutually parallel axes so as to generate a harmonically varying force component in one direction, and a second compensator unit also provided with two rotary bodies with the same eccentric mass, which rotate at the same rpm as the rotary bodies of the first compensator unit in opposite directions about parallel axes parallel with the axes of the first compensator unit so as to generate a second harmonically varying force component in a direction parallel to the direction of the first harmonically varying force component, the rotary bodies of the first compensator unit being driven by means of at least one first infinitely variable driving motor, the rotary bodies of the second compensator unit being driven by means of at least one second infinitely variable driving motor, and the vibration-compensating apparatus furthermore comprising a control and synchronizing device for controlling the driving motors of the compensator units in such a manner that the rotary bodies rotate at an rpm which is a multiple of the frequency of the excitation source.

### Background Art

A vibration-compensating apparatus of the above type is disclosed in EP-A1-0 409 462, in which the rotary bodies are arranged for rotation about an axis of rotation common to all of the rotary bodies.

DE-C-627 949 discloses a vibration-compensating unit comprising two identical rotary bodies rotating at the same rpm in opposite directions about vertical axes, thereby generating a harmonically oscillating force. The rotary bodies are driven synchronously with an excitation source such as a piston engine by means of electrical motors in order to compensate for the vibrations of a given order thereof. It is further suggested to use two such compensating units in order to compensate for vibrations of two different orders.

DK-B1-169,848 discloses a vibration-compensating apparatus comprising two rotary bodies rotatably journalled about parallel axes and with the same eccentric mass, and which through a transmission are interconnected so as to rotate in opposite directions at the same rpm and thereby to generate a harmonically varying force component in one direction. Each rotary body comprises a rotary body part fixedly mounted on a shaft, as well as a rotary body part releasably mounted on said shaft so as to be released for rotation. A change of the harmonically oscillating force component is carried out by turning the fixed and releasable rotary body parts of each rotary body relative to one another which requires that the compensating apparatus is stopped.

DE-C-292,71 1 discloses a vibration-compensating apparatus of the above type for compensating for the mass forces of a piston engine. The compensator units are connected to their respective end of the main shaft of the piston engine by means of a bevel gear transmission. In order to allow a change of the resulting harmonically oscillating force generated by the compensator, it is necessary to stop the compensator and consequently also the piston engine and replace the rotary bodies or change the phase difference between the force components of the two compensator units.

### Brief Description of the Invention

The object of the invention is to provide a vibration-compensating apparatus of the above type which allows a change of the resulting oscillating force component while said vibration-compensating apparatus is running.

The vibration-compensating apparatus according to the invention is characterised in that the axes of the rotary bodies are arranged such that they form the corners of a parallelogram, when seen in the axial direction and that the rotary bodies of the two compensator units both have the same eccentric mass and the same shape.

By changing the phase difference between the harmonically varying force component of the two compensator units, it is possible in an infinitely variable manner to vary the total harmonic force component of the vibration-compensating apparatus between the sum of the force component of the two compensator units and the difference therebetween while said apparatus is running. As a result, it is possible while the apparatus is running to adjust the compensation to the vibration conditions applying during changing operational conditions, such as changes in the cargo and speed of a ship as well as the weather conditions and the water depth. Furthermore, it is possible to use only one of the two compensator units, thereby achieving a reduced power consumption or providing an additional security in case one of the compensator units stops working. In addition, the use of two small compensator units, each being driven by at least one motor, results in a reduction of the necessary starting moment relative to the use of a single large compensator. The latter is of particular importance in connection with a compensator with rotary bodies which rotate in a vertical plane with the result that the eccentric masses thereof must be elevated in connection with the starting procedure and during the running of the compensator.

According to the invention, the rotary bodies of the first compensator unit may be driven by a single first driving motor and be interconnected by means of a first transmission so as to rotate in opposite directions, and the rotary bodies of the second compensator unit may be driven by a single second driving motor and be interconnected by means of a second transmission so as to rotate in opposite directions.

Moreover, according to the invention, the transmission between the two rotary bodies of each compensator unit may comprise a releasable connection allowing a turning of the two rotary bodies relative to one another so as to change their position relative to one another. A change of the relative position of the two rotary bodies of each compensator unit causes a change of the direction of the oscillating harmonic force component. Thus, it is possible to change the direction of the resulting harmonic force component without turning the entire vibration-compensating apparatus.

Furthermore, the releasable connection may according to the invention be formed by a releasable coupling, which can be released during the operation. This embodiment of the invention is particularly advantageous in allowing a change of the direction of the resulting force component of the vibration-compensating apparatus during the operation. As a result, when the rotary bodies rotate in vertical planes, i.e. about horizontal axes, it is possible to start the vibration-compensating apparatus with the rotary bodies in a position, in which a horizontally resulting force component is generated and the starting moment is low, and subsequently to move the rotary bodies into a position corresponding to the desired compensating direction, for instance vertical.

Furthermore, each rotary body of the first compensator unit and each rotary body of the second compensator unit may be driven by a respective driving motor. In this manner, it is possible during the running of the vibration-compensating apparatus to change the direction of the force component of each of the two compensator units as well as the phase difference between the force components of the two compensator units, whereby it is possible to change both the direction and the magnitude of the resulting harmonic force component of the vibration-compensating apparatus during operation.

Moreover, the rotary bodies of the two compensator units may according to the invention be arranged in a common housing. This embodiment is considered the most advantageous embodiment for achieving a vibration-compensating apparatus being as compact as possible.

According to a further embodiment of the invention the rotary bodies of each compensator unit are axially displaced in such a manner that diagonally arranged rotary bodies are arranged in the same plane, whereby the axes of each compensator unit may advantageously be interspaced in such a manner that the rotary bodies thereof sweep a common area when seen in the axial direction. In this connection, a further compactness can be obtained when the rotary bodies of the two compensator units not being in the same plane are also arranged such that they sweep a common area.

In the latter case, however, it must be ensured that the diagonally arranged rotary bodies do not sweep a common area.

Finally, each compensator unit may according to the invention comprise a sensor for at least each single driving motor driving the rotary bodies thereof, said sensor continuously detecting the position and the rpm of the rotary body/bodies driven by said driving motor, as well as a speed sensor continuously detecting the speed of the at least one driving motor or the rotary body/bodies driven thereby.

### Brief Description of the Drawings.

The invention is explained in detail below with reference to the drawing, in which
Fig. 1 is a diagrammatic, top view of an embodiment of a vibration-compensating apparatus according to the invention with four identical rotary bodies,
Fig. 2 is a sectional view taken along the line A-A of Fig. 1,
Fig. 3 is a top view of the reference position of the rotary bodies,
Fig. 4 illustrates the variation of the force component of each rotary body in the force direction of the vibration-compensating apparatus shown in Figs. 1, 2, and 3, said force direction being vertical, as seen in Figs. 1 and 3,
Fig. 5 illustrates the resulting force component of the vibration-compensating apparatus when said apparatus is set to provide maximum force, as shown in Fig. 3,
Fig. 6 illustrates the resulting force component of the vibration-compensating apparatus when said apparatus is set to provide half force, as shown in Figs. 1 and 2,
Fig. 7 illustrates the variation of the resulting force of the vibration-compensating apparatus at a phase-displacement of the force,
Fig. 8 is a diagrammatic, top view of the vibration-compensating apparatus, when it is set to provide a resulting force displaced 30° relative to vertical,
Fig. 9 is a diagrammatic view of the vibration-compensating apparatus according to the invention used for compensating for vibrations generated by an engine of a vessel,
Fig. 10 is a diagrammatic, top view of a second embodiment of a vibration-compensating apparatus according to the invention with four identical rotary bodies, and
Fig. 11 is a sectional view taken along the line B-B of Fig. 10.

### Best Mode for Carrying Out the Invention

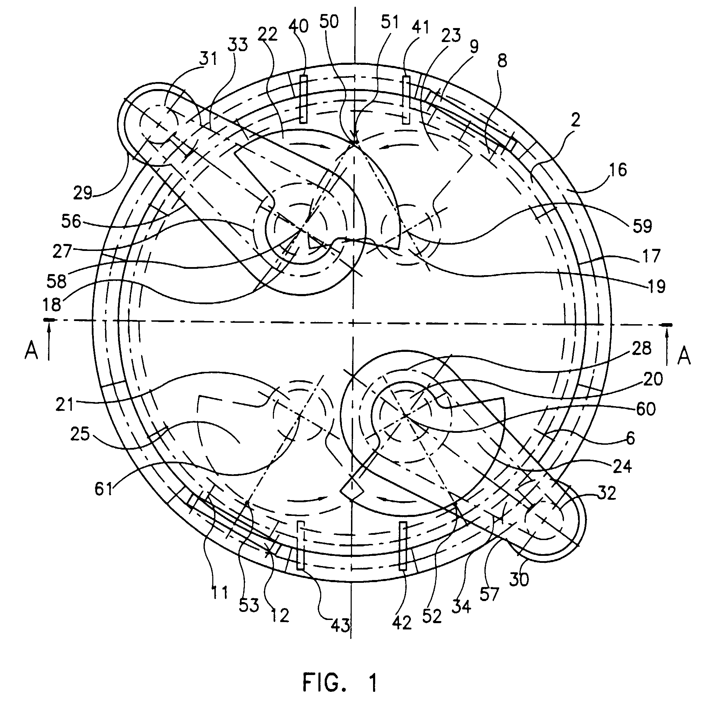

The embodiment of a vibration-compensating apparatus according to the invention shown in Figs. 1, 2, and 3 comprises a housing 1 with a cylindrical wall 2, an upper end wall 3, a lower end wall 4, as well as an intermediary wall 5. The end walls 3 and 4 are secured to the cylindrical wall by means of screws 6 shown by means of their centre line. An upper chamber 7 is formed between the upper end wall 3 and the intermediary wall 5, access to said chamber being allowed through openings 8 and 11 in the cylindrical wall 2. The openings 8 and 11 can be closed by means of covers 9 and 12. A lower chamber 10 is formed between the intermediary wall 5 and the lower wall 4.

The lower end wall 4 comprises an outward recess 13 covered by means of a bottom cover 14 so as to form a lubricant chamber 15, from which lubricant is supplied to the bearings and gear wheels of the vibration-compensating apparatus through lubricant pipes not shown. Finally, the lower end wall 4 forms a projecting flange 16 provided with mounting openings 17 shown by means of their centre line and used for bolting the vibration-compensating apparatus onto a base.

Four shafts 18, 19, 20, 21 are arranged in the interior of the housing 1, the axes 58, 59, 60, 61 of said shafts being positioned in the corners of a parallelogram, when seen in axial direction. Two diagonally arranged shafts 18, 20 are supported by bearings arranged in the upper end wall 3 and the intermediary wall 5. The remaining two diagonally arranged shafts 19, 21 are supported by bearings arranged in intermediary wall 5 and the lower end wall 4. A rotary body 22, 23, 24, 25 is arranged on each shaft 18, 19, 20, 21, said rotary bodies in the axial direction being shaped substantially as a sector of a circle and accordingly presenting an eccentrically positioned mass centre.

The shafts 18, 19, 20, 21 and the rotary bodies 22, 23, 24, 25 arranged thereon are furthermore arranged in such a way inside the housing 1 that the diagonally arranged upper shafts 18, 20 are interspaced such that their rotary bodies rotating in the same plane do not sweep a common area. However, the shafts 18, 19; 21, 20 of the two compensator units with rotary bodies rotating in different planes are arranged so close that the rotary bodies 22, 23; 24, 25 sweep a common area during their rotation. Correspondingly, the upper shaft 18, 20 of one compensator unit is arranged so close to the lower shaft 19, 21 of the second compensator unit that the upper rotary body 22, 24 of one compensator unit sweeps a common area with the lower rotary body 23, 25 of the second compensator unit. The resulting vibration-compensating apparatus is very compact, and the base on which said apparatus is mounted is not subjected to further moments, when the force direction of the vibration-compensating apparatus is changed.

Each upper shaft 18, 20 extends through the upper end wall 3 and comprises a projecting shaft end 26, on which a disk 27, 28 is mounted. Two motors 29, 30 with a variable rpm, such as servomotors, are mounted on the outer side of the housing. One motor 29 drives the disk 27 on the shaft end 26 of the shaft 18 by means of a disk 31 mounted on the output shaft thereof and a toothed belt 33. Correspondingly, the second motor 30 drives the disk 28 and consequently,the shaft 20 by means of a disk 32 mounted on the shaft end thereof and a toothed belt 34. The driving connections between the motors 29, 30 and the upper shafts 18, 20 are shielded by means of shields 56, 57.

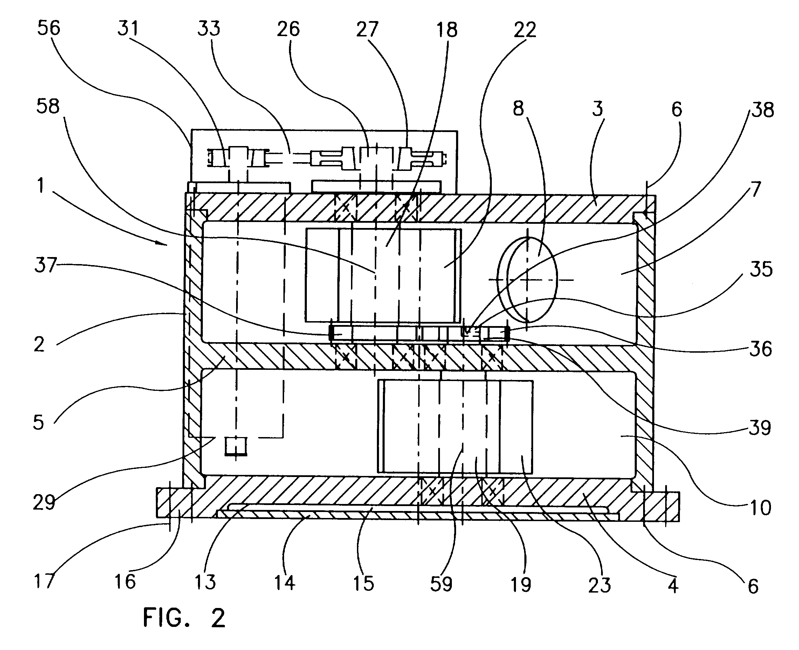

Each lower shaft 19, 21 extends slightly into the upper chamber 7 through the intermediary wall 5. A gear wheel 36 is mounted on the shaft end 35 accommodated in the upper chamber. The gear wheel 36 engages a mating gear wheel 37 mounted on each of the upper shafts 18, 20 between the rotary body 22, 24 in question and the intermediary wall 5. The gear wheels 36 on the shaft ends 35 of the lower shafts 19, 21 projecting into the upper chamber are releasably arranged so as to be released for rotation. The gear wheels 36 of the illustrated embodiment can be turned relative to the shaft ends 35 by pressurized fluid being fed through a channel 38 to the mounting area of the gear wheel 36 in question on the shaft end 35. The releasable gear wheels 36 can, however, be mounted by means of a wide range of different releasable shaft/hub connections, such as for instance a conical friction coupling or another connecting means which allows a fast release of the connection between the shaft and the gear wheel mounted thereon. A coupling releasable by way of remote control may advantageously be used between the gear wheel 36 and the shaft end 35. Such a releasable coupling 39 is shown by means of dotted lines in Fig. 2.

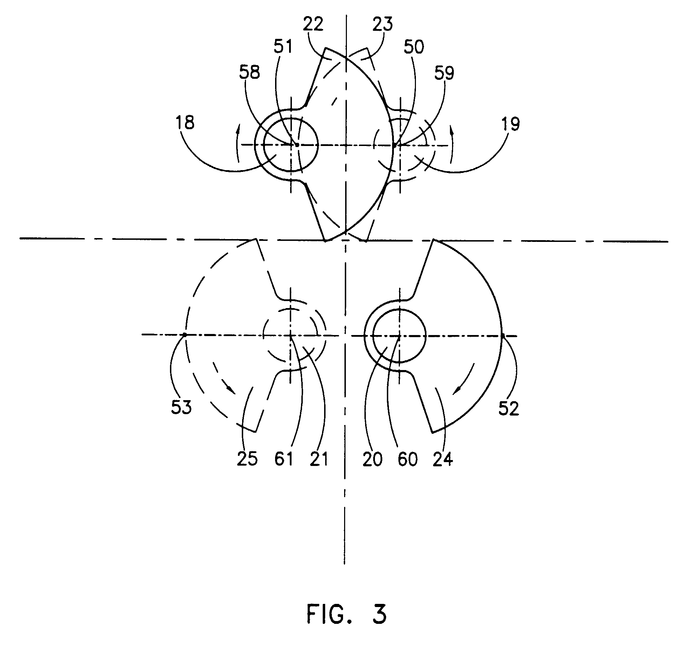

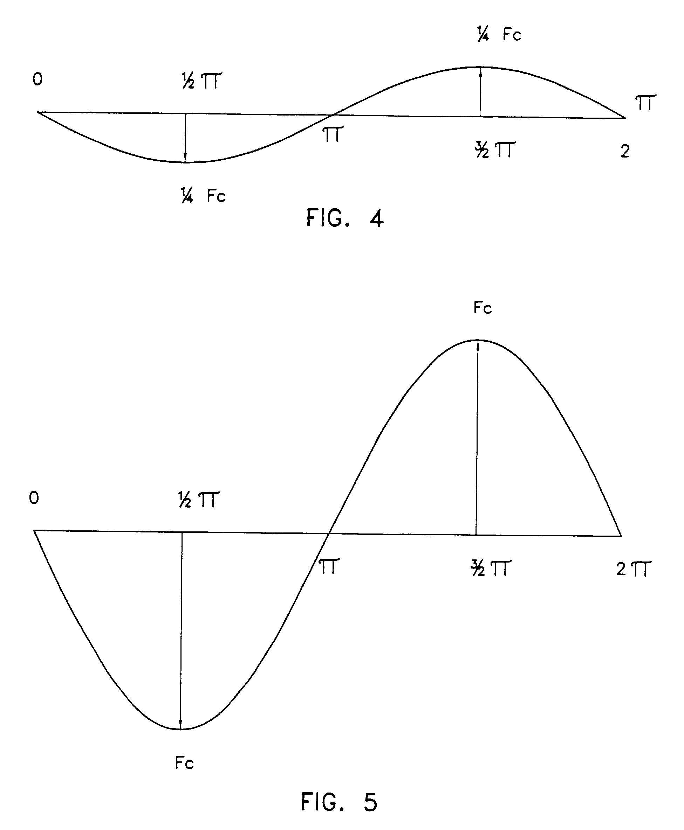

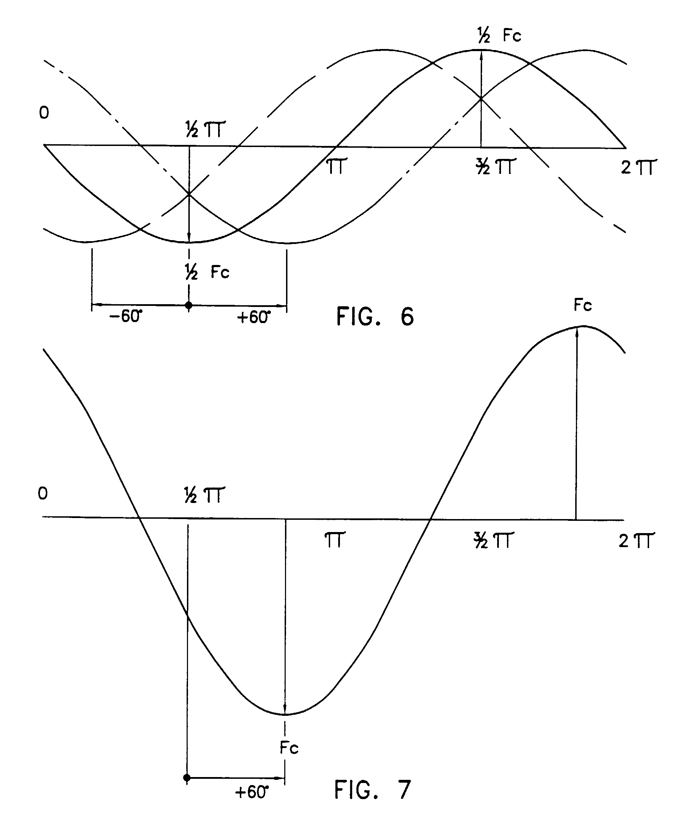

A first compensator unit is formed by means of the upper rotary body 22 driven by one motor 29 and the lower rotary body 23 driven in opposite direction by means of the gear wheel connection. Correspondingly, a second compensator unit is formed by the second upper rotary body 24 driven by the second motor 30 and the second lower rotary body 25 driven in opposite direction by means of the gear wheel connection. The rotary body of each compensator unit generates a harmonically varying force component in the vertical direction of Fig. 1, said force component varying between -1/4 F_{c} and +1/4 F_{c}, where F_{c} is the maximum total force component of the vibration-compensating apparatus. The latter is shown in Fig. 4, where the position of the rotary bodies shown in Fig. 3 is used as reference position, for which reason said rotary bodies do not generate a force component in vertical direction at 0°, π and 2π. Correspondingly, Fig. 5 shows the variation of the maximum resulting force component F_{c} for the vibration-compensating apparatus, i.e. when the two compensator units are set so as to simultaneously provide the maximum force as shown in Fig. 3. In this connection, it should be mentioned that the vibration-compensating apparatus shown in Figs. 1 and 2 does not provide its maximum force, but half force, because one compensator unit, i.e. the compensator unit including the rotary bodies 22 and 23, has been displaced -60° relative to the reference position in Fig. 3, in which the vibration-compensating apparatus provides its maximum resulting force, and the second compensator unit including the rotary bodies 24 and 25 has been displaced +60° relative to the reference position. The latter appears from Fig. 6, in which the force component of the compensator unit comprising the rotary bodies 22 and 23 is shown by means of a broken line, the force component of the compensator unit comprising the rotary bodies 24, 25 is shown by means of a dotted line, and the resulting force component by means of a full-drawn line.

Finally, four sensors 40, 41, 42, 43 are arranged in the cylindrical wall 2 of the housing 1, said sensors detecting the passage of a point on the rotary bodies. The point is formed of a screw head 50, 51, 52, 53 of a screw screwed into the rotary bodies on a radial line through the eccentric mass centre thereof. In the present case. the sensors 40, 41 of one compensator unit are arranged so as to indicate a rotation of the rotary bodies 22, 23 of 3/2π from the reference position shown in Fig. 3, and the sensors 42, 43 of the second compensator unit are arranged so as to indicate a rotation the rotary bodies 24, 25 of π/2 from the said reference position.

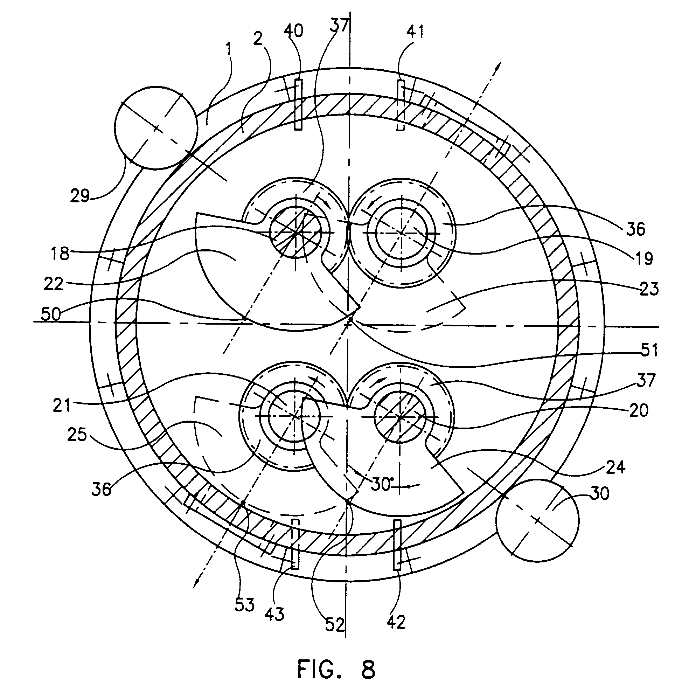

In order to change the force direction of the resulting force component of the vibration-compensating apparatus relative to the direction shown in Figs. 1 and 3, the gear wheel 36 on the two lower shafts 19, 21 is released by pressurized fluid being fed thereto through their channels 38. Subsequently, the two upper shafts 18, 20 are turned twice the angle of the desired change of direction, and the gear wheels 36 of the lower shafts 19, 21 is again fastened. Fig. 8 illustrates the position of the rotary bodies at a maximum resulting force after the latter has been changed + 30° relative to its direction shown in Figs. 1 and 3. A change of the force direction causes a simultaneous change of the point during the cycle of the vibration-compensating apparatus at which the sensors detect the passage of the screw heads on the rotary bodies, when seen relative to the direction of the force. Thus, on each compensator unit the screw head 51,53 of one of the rotary bodies 23, 25 passes the sensor 41, 43 a an angle of rotation later corresponding to the angular change of force direction, and the screw head 50, 52 of the second rotary body 22, 24 passes the sensor 40, 42 the said angle earlier. After the change of the force direction, the magnitude of the resulting force can be changed by the changing the phase between the two compensator units, as explained above.

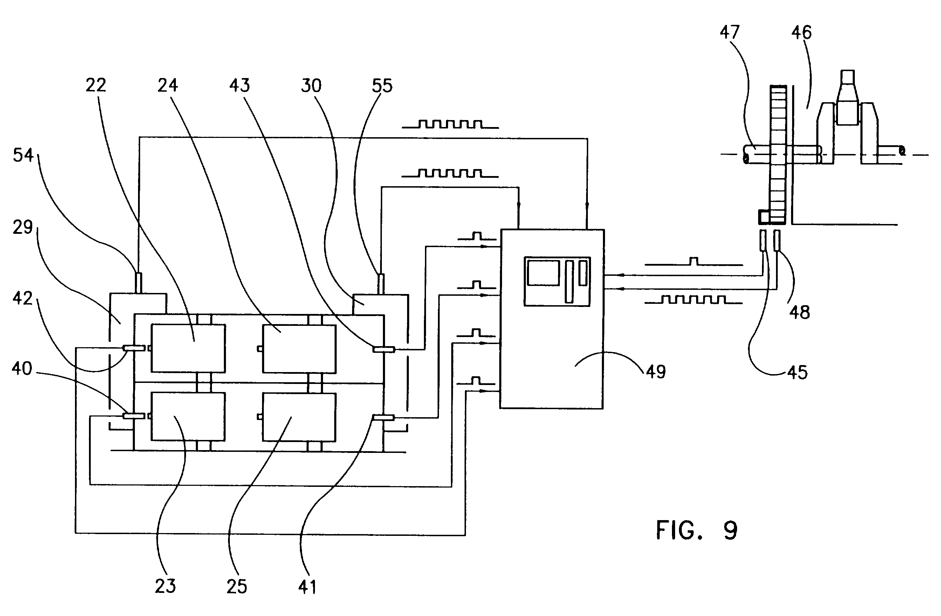

Reference is now made to Fig. 9, where the control and the setting of a vibration-compensating apparatus according to the invention will be described in greater detail, the vibration-compensating apparatus of the example being used for counteracting the vibrations generated by the main engine of a ship or another excitation source on board the ship.

A sensor 45 continuously detects a reference position on the main shaft 47 of the main engine as well as the rpm thereof. The reference position may typically be the top position of the first cylinder measured on the main shaft 47 of the engine 46. The speed of the main engine 46 is also continuously detected by means of a speed sensor (pulse burst/sensor) 48. The position and the speed of the reference position is continuously detected by a control and synchronizing device 49. In addition, the control and synchronizing device 49 continuously detects the speed of the motor 29 of the first compensator unit and the motor 30 of the second compensator unit by means of speed sensors 54, 55, as well as the position and rpm of the four rotary bodies by means of the sensors 40, 41, 42, 43. Furthermore, the control and synchronizing device is supplied with data on the phase difference between the excitation source to be compensated for and the reference position on the main shaft of the engine.

The signals measured on the main shaft 47 of the engine are compared in the control and synchronizing device 49 with the signals reflecting the speed of the servomotors 29 and 30 as well as with the signals from the sensors 40, 41, 42, 43 reflecting the position and rpm of the vibration-compensating apparatus. Based on the latter, the rotating speed of the motors 29, 30 of the compensator units is continuously adjusted in such a manner that the vibration-compensating apparatus runs synchronously with and with the desired phase angle relative to the main engine and consequently relative to the excitation source, and further such that it provides the compensating force desired for compensating for the immediate vibrations generated by the excitation source.

When the magnitude of the force is to be changed, the synchronizing of one compensator unit is changed by a corresponding positive angle and of the second compensator unit by a corresponding negative angle, as previously explained in connection with Figs. 1, 3, and 6. The magnitude of the force can be changed either based on data encoded in the control and synchronizing device 49 in advance or based on signals transmitted to the control and synchronizing device 49 from a vibration-measuring device (for instance an accelerometer). A change of the magnitude of the force does not involve a change of the phase angle between the force and the reference position on the engine provided the magnitude of the force is changed in the manner described above. The magnitude of the force can, of course, also be changed merely by changing the synchronizing of one of the compensator units relative to the reference position. Thus, half force can also be obtained by changing the synchronizing of one compensator unit relative to the reference position by 120° and by not changing the setting of the second compensator unit. As a result, a phase displacement occurs of the force of the vibration-compensating apparatus and of the reference position on the marine engine, said phase displacement corresponding to half the angle which the synchronizing of the compensator unit is changed relative to the reference position, i.e. 60° in the present case. When this method is used for changing the magnitude of the force, the data on the changed phase angle between the force of the vibration-compensating apparatus and the reference position on the engine is or will be entered in the control and synchronizing device 49.

When the phase angle is to be changed, the synchronizing of both compensator units is changed corresponding to the desired phase angle. Thus, Fig. 7 shows an increase of the phase angle of the vibration-compensating apparatus relative to the main engine by +60°. The change of the phase angle can also be performed based either on data encoded in the control and synchronizing device 49 in advance or based on signals transmitted thereto from a vibration-measuring device.

When the force direction is changed as described in connection with Fig. 8, the phase angle is simultaneously correspondingly changed, by +30° in the example referred to. After the change of the force direction, the same methods are used for setting the magnitude of the force and the phase, cf. above, but now relative to the force direction changed by +30°.

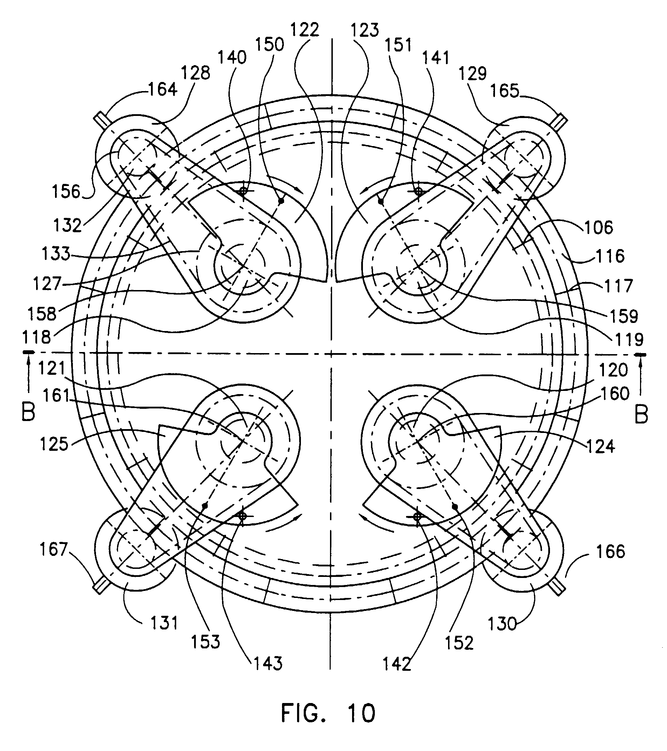

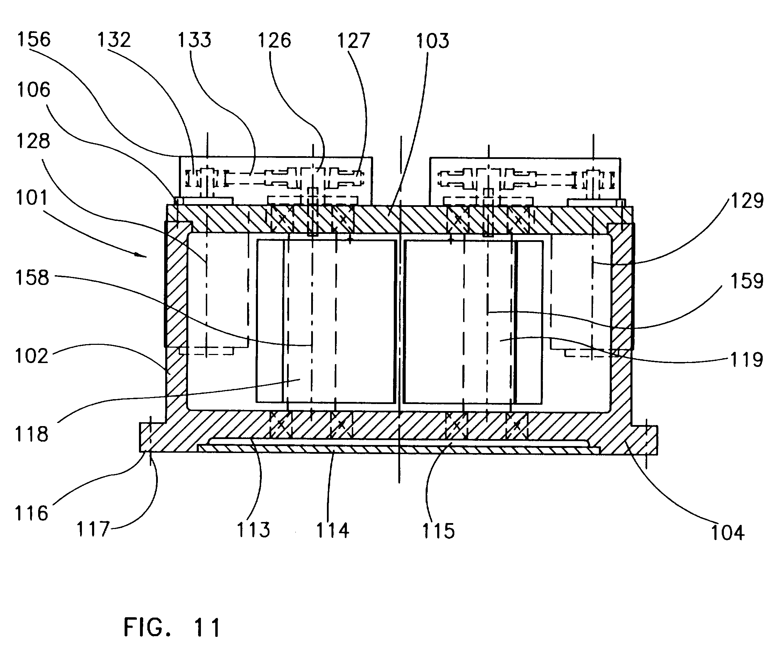

The embodiment shown in Figs. 10 and 11 of a vibration-compensating apparatus according to the invention comprises a housing 101 with a cylindrical wall 102, an upper end wall 103, and a lower end wall 104. The upper end wall 103 is secured to the cylindrical wall by means of screws 106 shown by means of their centre line. The lower end wall 104 comprises an outward recess 113 covered by means of a bottom cover 114 so as to form a lubricant chamber 115. The lower end wall 104 comprises furthermore a projecting flange 116 provided with mounting openings 117 shown by means of their centre line and used for bolting the vibration-compensating apparatus onto a base.

Four shafts 118, 119, 120, 121 are arranged in the interior of the housing 101, the axes 158, 159, 160, 161 of said shafts being positioned in the corners of a square, when seen in axial direction. Each shaft is supported by bearings arranged in the upper end wall 103 and the lower end wall 104. A rotary body 122, 123, 124, 125 is arranged on each shaft 118, 119, 120, 121, said rotary bodies in the axial direction being shaped substantially as a sector of a circle and accordingly presenting an eccentrically positioned mass centre. The shafts 118, 119, 120, 121 and the rotary bodies 122, 123, 124, 125 arranged thereon are furthermore arranged in such a way that during rotation no rotary body sweeps an area which is common with the area swept by a second rotary body during rotation.

Each shaft 118, 119, 120, 121 extends through the upper end wall 103 and comprises a projecting shaft end 126, on which a disk 127 is mounted. Four motors 128, 129, 130, 131 with a variable rpm, such as servomotors, are mounted on the outer side of the housing 101. Each motor drives the disk 127 on the shaft ends 126 of the shafts 118, 119, 120, 121 by means of a disk 132 mounted on its output shaft and a toothed belt 133. The driving connections between the motors 128, 129, 130, 131 and the shafts 118, 119, 120, 121 are shielded by means of shields 156.

The rotary bodies 122 and 123 are driven in opposite directions by means of the motors 128 and 129 at the same rpm and form a first compensator unit. Correspondingly, the rotary bodies 125 and 124 are driven in opposite directions at the same rpm by means of the motors 131 and 130 and form a second compensator unit. As explained in connection with Figs. 1 to 9, the rotary body of each compensator unit generates a harmonically varying force component in vertical direction, cf. Fig. 10, which varies between -1/4 F_{c} and +1/4 F_{c}, where F_{c} is the maximum, total force component for the vibration-compensating apparatus. It should, furthermore, be mentioned that the vibration-compensating apparatus shown in Figs. 10 and 11 is shown in a position corresponding to the vibration-compensating apparatus of Figs. 1 and 2, i.e. a position, in which it provides half force, because the first compensator unit with the rotary bodies 122 and 123 is displaced -60°relative to the reference position of Fig. 3, and the second compensator unit with the rotary bodies 124 and 125 is displaced +60° relative to the reference position.

Finally, four sensors 140, 141, 142, 143 are arranged in the upper end wall 103 of the housing 101, said sensors detecting the passage of a point on the rotary bodies. The point is a screw head 150, 151, 152, 153 of a screw screwed axially into the rotary bodies on a radial line through the eccentric mass centre thereof. In the present case, the sensors 140, 141 of the first compensator unit with the rotary bodies 122, 123 are arranged so as to indicate a rotation of said rotary bodies 122, 123 of 3/2n from the reference position shown in Fig. 3, and the sensors 142, 143 of the second compensator unit with the rotary bodies 124, 125 are arranged so as to indicate a rotation of said rotary bodies 124, 125 of n/2 from said reference position. Furthermore, each of the motors 128, 129, 130, 131 are provided with a speed sensor 164, 165, 166, 167 continuously detecting the speed of the motor in question and consequently of the rotary body 122, 123, 124, 125 driven thereby. The position and the speed of the rotary bodies are as previously described in connection with Fig. 9 continuously detected by the control and synchronizing device 49.

The magnitude of the resulting force component is as previously described changed by changing the phase difference between the first compensator unit with the rotary bodies 122 and 123 and the second compensator unit with the rotary bodies 124 and 125. The direction of the resulting force component of the vibration-compensating apparatus can be changed relative to the direction shown in Figs. 10 and 11 by changing the phase difference between the rotary bodies 122, 123 of the first compensator unit in such a manner that the screw head 150 on the rotary body 122 passes the sensor 141 an angle of rotation earlier corresponding to the intended angular change of the force direction, and furthermore in such a manner that the screw head 151 on the rotary body 123 passes the sensor 141 an angle of rotation later corresponding to the intended angular change of the force direction. Correspondingly, the phase difference between the rotary bodies 124 and 125 of the second compensator unit is changed in such a manner that the screw head 152 on the rotary body 124 passes the sensor 142 an angle of rotation earlier corresponding to the intended angular change of the force direction, and in such a manner that the screw head 153 on the rotary body 125 passes the sensor 143 an angle of rotation later corresponding to the intended angular change of the force direction. The change of the force direction is positive in the clockwise direction shown in Fig. 10. Thus, when the force direction is to be changed 30° relative to vertical as shown in Fig. 10, the phase difference between the rotary bodies of the two compensator units is changed 30° in the manner described above. In practice, the latter is carried out by briefly accelerating and decelerating the rotational speeds of the rotary bodies in question, until the desired phase displacement has been obtained. It is thus possible during the running of the apparatus to change the magnitude as well as the direction of the resulting harmonic force component of the vibration-compensating apparatus.

Concerning the control of the vibration-compensating apparatus relative to an excitation source by means of the control and synchronizing device 49, reference is made to the explanation related to Fig. 9 of the vibration-compensating apparatus shown in Figs. 1 to 8.

The invention can be changed in many ways without thereby deviating from the scope thereof. Thus, the rotary bodies of the vibration-compensating apparatus can also rotate about horizontal axes or inclining axes instead of about vertical axes. Finally, the compensator units can be arranged in separate housings instead of in a common housing.

## Claims

1. A vibration-compensating apparatus for counteracting harmonic vibrations from an excitation source, such as vibrations generated by an engine of a vessel, said apparatus comprising a first compensator unit with two rotary bodies (22, 23; 122, 123) with the same eccentric mass, and rotating at the same rpm in opposite direction about mutually parallel axes so as to generate a harmonically varying force component in one direction, and a second compensator unit also provided with two rotary bodies (24, 25; 124, 125) with the same eccentric mass and rotating at the same rpm as the rotary bodies (22, 23) of the first compensator unit in opposite directions about parallel axes parallel to the axes of the first compensator unit so as to generate a second harmonically varying force component in a direction parallel to the first harmonically varying force component, the rotary bodies (22, 23; 122, 123) of the first compensator unit being driven by at least one first infinitely variable driving motor (29; 128, 129), the rotary bodies (24, 25; 124, 125) of the second compensator unit being driven by at least one second infinitely variable driving motor (30; 130, 131), and the vibration-compensating apparatus furthermore comprising a control and synchronizing device (49) for controlling the driving motors (29, 30; 128, 129, 130, 131) of the compensator units in such a manner that the rotary bodies rotate at an rpm which is a multiple of the frequency of the excitation source, **characterised** in that the axes (58, 59, 60, 61; 158, 159, 160, 161) of the rotary bodies (22, 23, 24, 25; 122, 123, 124, 125) are arranged such that they form the corners of a parallelogram, when seen in the axial direction and that the rotary bodies (22, 23, 24, 25; 122, 123, 124, 125)) of the two compensator units both have the same eccentric mass and the same shape.

2. A vibration-compensating apparatus as claimed in claim 1, **characterised** in that the rotary bodies (22, 23) of the first compensator unit are driven by a single first driving motor (29) and are interconnected by means of a first transmission (36, 37) for rotation in opposite directions, and that the rotary bodies (24, 25) of the second compensator unit are driven by a single second driving motor (30) and are interconnected by means of a second transmission (36, 37) for rotation in opposite directions.

3. A vibration-compensating apparatus as claimed in claim 2, **characterised** in that the transmission (36, 37) between the two rotary bodies (22, 23, 24, 25) of each compensator unit comprises a releasable connection allowing a rotating of the two rotary bodies relative to one another so as to change their mutual position.

4. A vibration-compensating apparatus as claimed in claim 3, **characterised** in that the releasable connection is a releasable coupling (39), which can be released by way of remote control during a running of the apparatus.

5. A vibration-compensating apparatus as claimed in claim 1, **characterised** in that each rotary body (122, 123) of the first compensator unit and each rotary body (124, 125) of the second compensator unit are driven by a respective driving motor (128, 129, 130, 131).

6. A vibration-compensating apparatus as claimed in one or more of the preceding claims, **characterised** in that the rotary bodies (22, 23, 24, 25; 122, 123, 124, 125) of the two compensator units are arranged in a common housing (1; 101).

7. A vibration-compensating apparatus as claimed in one or more of the preceding claims, **characterised** in that the rotary bodies of each compensator unit are axially displaced in such a manner that diagonally arranged rotary bodies (22, 24; 23, 25) are arranged in the same plane, and that the axes (58, 59; 60, 61) of each compensator unit are interspaced such that their rotary bodies (22, 23, 24, 25) sweep a common area, when seen in axial direction.

8. A vibration-compensating apparatus as claimed in one or more of the preceding claims, **characterised** in that each compensator unit (22, 23; 24, 25; 122, 123; 124, 125) comprises a sensor (40, 41, 42, 42; 140, 141, 142, 143) for each driving motor (29, 30; 128, 129, 130, 131) driving the rotary bodies thereof, said sensor detecting the position and the rpm of the rotary body/bodies driven by said driving motor, each compensator unit further comprising a speed sensor (54, 55; 164, 165, 166, 167) for continuously detecting the speed of the at least one driving motor or the rotary body/bodies driven thereby.

## Patentansprüche

1. Eine schwingungskompensierende Vorrichtung, um Oberschwingungen von einer Anregungsquelle, wie z.B. von einer Schiffsmaschine erzeugte Schwingungen, entgegenzuwirken, wobei die Vorrichtung eine erste Kompensiereinheit mit zwei Drehkörpern (22, 23; 122, 123) mit derselben exzentrischen Masse, die sich mit derselben Drehzahl in entgegengesetzter Richtung um zueinander parallele Achsen derart drehen, daß sie eine harmonisch variierende Kraftkomponente in einer Richtung erzeugen, und eine zweite Kompensiereinheit umfaßt, die auch mit zwei Drehkörpern (24, 25; 124, 125) mit derselben exzentrischen Masse versehen ist, die sich mit derselben Drehzahl wie die Drehkörper (22, 23) der ersten Kompensiereinheit in entgegengesetzten Richtungen um parallele Achsen, die zu den Achsen der ersten Kompensiereinheit parallel sind, derart drehen, daß sie eine zweite harmonisch variierende Kraftkomponente in einer zu der ersten harmonisch variierenden Kraftkomponente parallelen Richtung erzeugen, wobei die Drehkörper (22, 23; 122, 123) der ersten Kompensiereinheit von wenigstens einem ersten stufenlos regelbaren Antriebsmotor (29; 128, 129) angetrieben werden, ferner die Drehkörper (24, 25; 124, 125) der zweiten Kompensiereinheit von wenigstens einem zweiten stufenlos regelbaren Antriebsmotor (30; 130, 131) angetrieben werden und die schwingungskompensierende Vorrichtung außerdem eine Steuer- und Synchronisiereinrichtung (49) zum Steuern des Antriebsmotors (29, 30; 128, 129, 130, 131) der Kompensiereinheiten in der Weise, daß die Drehkörper sich mit einer Drehzahl drehen, die ein Mehrfaches der Frequenz der Anregungsquelle ist, umfaßt, dadurch gekennzeichnet, daß die Achsen (58, 59, 60, 61; 158, 159, 160, 161) der Drehkörper (22, 23, 24, 25; 122, 123, 124, 125) derart angeordnet sind, daß sie, in axialer Richtung gesehen, die Ecken eines Parallelogramms bilden, und daß die Drehkörper (22, 23, 24, 25; 122, 123, 124, 125) der zwei Kompensiereinheiten dieselbe exzentrische Masse und dieselbe Gestalt aufweisen.

2. Eine schwingungskompensierende Vorrichtung nach Anspruch 1, dadurch gekennzeichnet, daß die Drehkörper (22, 23) der ersten Kompensiereinheit von einem einzigen ersten Antriebsmotor (29) angetrieben werden und mittels einer ersten Übertragung (36, 37) zum Drehen in entgegengesetzten Richtungen miteinander verbunden sind, und daß die Drehkörper (24, 25) der zweiten Kompensiereinheit von einem einzigen zweiten Antriebsmotor (30) angetrieben werden und mittels einer zweiten Übertragung (36, 37) zum Drehen in entgegengesetzten Richtungen miteinander verbunden sind.

3. Eine schwingungskompensierende Vorrichtung nach Anspruch 2, dadurch gekennzeichnet, daß die Übertragung (36, 37) zwischen den zwei Drehkörpern (22, 23, 24, 25) jeder Kompensiereinheit eine lösbare Verbindung umfaßt, die ein Drehen der zwei Drehkörper relativ zueinander erlaubt, um ihre gegenseitige Position zu verändern.

4. Eine schwingungskompensierende Vorrichtung nach Anspruch 3, dadurch gekennzeichnet, daß die lösbare Verbindung eine lösbare Kupplung (39) ist, die mittels einer Fernsteuerung während eines Laufes der Vorrichtung gelöst werden kann.

5. Eine schwingungskompensierende Vorrichtung nach Anspruch 1, dadurch gekennzeichnet, daß jeder Drehkörper (122, 123) der ersten Kompensiereinheit und jeder Drehkörper (124, 125) der zweiten Kompensiereinheit von einem jeweiligen Antriebsmotor (128, 129, 130, 131) angetrieben wird.

6. Eine schwingungskompensierende Vorrichtung nach einem oder mehreren vorangehenden Anspruch/Ansprüche, dadurch gekennzeichnet, daß die Drehkörper (22, 23, 24, 25; 122, 123, 124, 125) der zwei Kompensiereinheiten in einem gemeinsamen Gehäuse (1; 101) angeordnet sind.

7. Eine schwingungskompensierende Vorrichtung nach einem oder mehreren vorangehenden Anspruch/Ansprüche, dadurch gekennzeichnet, daß die Drehkörper jeder Kompensiereinheit in der Weise axial verschoben sind, daß diagonal angeordnete Drehkörper (22, 24; 23, 25) in derselben Ebene angeordnet sind, und daß die Achsen (58, 59; 60, 61) jeder Kompensiereinheit mit einem Zwischenraum in der Weise versehen sind, daß ihre Drehkörper (22, 23, 24, 25), in axialer Richtung gesehen, ein gemeinsames Gebiet überstreichen.

8. Eine schwingungskompensierende Vorrichtung nach einem oder mehreren vorangehenden Anspruch/Ansprüchen, dadurch gekennzeichnet, daß jede Kompensiereinheit (22, 23; 24, 25; 122, 123; 124, 125) einen Sensor (40, 41, 42, 43; 140, 141, 142, 143) für jeden Antriebsmotor (29, 30; 128, 129, 130, 131) zum Antreiben der Drehkörper derselben umfaßt, wobei der Sensor die Position und die Drehzahl des/der von dem Antriebsmotor angetriebenen Drehkörpers/Drehkörper detektiert, und jede Kompensiereinheit außerdem einen Geschwindigkeitssensor (54, 55; ,164, 165, 166, 167) zum kontinuierlichen Detektieren der Geschwindigkeit und des wenigstens einen Antriebsmotors oder des/der davon angetriebenen Drehkörpers/Drehkörper umfaßt.

## Revendications

1. Appareil de compensation de vibrations pour compenser des vibrations harmoniques d'une source d'excitation, telles que des vibrations engendrées par un moteur d'un bateau, ledit appareil comprenant une première unité de compensation avec deux corps rotatifs (22, 23 ; 122, 123) avec la même masse excentrée, et tournant à la même vitesse angulaire dans des sens opposés autour d'axes mutuellement parallèles de manière à engendrer une composante de force variant de manière harmonique suivant une direction, et une seconde unité de compensation munie de deux corps rotatifs (24, 25 ; 124, 125) avec la même masse excentrée et tournant à la même vitesse angulaire que les corps rotatifs (22, 23) de la première unité de compensation suivant des sens opposés autour d'axes parallèles parallèles aux axes de la première unité de compensation de manière à engendrer une seconde composante de force variant de manière harmonique dans une direction parallèle à la première composante de force variant de manière harmonique, les corps rotatifs (22, 23 ; 122, 123) de la première unité de compensation étant entraînés par au moins un premier moteur d'entraînement infiniment variable (29 ; 128, 129), les corps rotatifs (24, 25 ; 124, 125) de la seconde unité de compensation étant entraînés par au moins un second moteur d'entraînement infiniment variable (30 ; 130, 131), et l'appareil de compensation des vibrations comprenant en outre un dispositif de synchronisation et de commande (49) pour commander les moteurs d'entraînement (29, 30; 128, 129, 130, 131) des unités de compensation de telle manière que les corps rotatifs tournent à une vitesse angulaire qui est un multiple de la fréquence de la source d'excitation, caractérisé en ce que les axes (58, 59, 60, 61 ; 158, 159, 160, 161) des corps rotatifs (22, 23, 24, 25 ; 122, 123, 124, 125) sont agencés de sorte qu'ils forment les coins d'un parallélogramme, lorsque vus suivant une direction axiale et en ce que les corps rotatifs (22, 23, 24, 25; 122, 123, 124, 125) des deux unités de compensation ont tous deux la même masse excentrée et la même forme.

2. Appareil de compensation de vibrations selon la revendication 1, caractérisé en ce que les corps rotatifs (22, 23) de la première unité de compensation sont entraînés par un unique premier moteur d'entraînement (29) et sont interconnectés au moyen d'une première transmission (36, 37) pour tourner dans des sens opposés, et en ce que les corps rotatifs (24, 25) de la seconde unité de compensation sont entraînés par un unique second moteur d'entraînement (30) et sont interconnectés au moyen d'une seconde transmission (36, 37) pour tourner dans des sens opposés.

3. Appareil de compensation de vibrations selon la revendication 2, caractérisé en ce que la transmission (36, 37) entre les deux corps rotatifs (22, 23, 24, 25) de chaque unité de compensation comprend une connexion libérable permettant une rotation des deux corps rotatifs l'un par rapport à l'autre de manière à changer leur position relative.

4. Appareil de compensation de vibrations selon la revendication 3, caractérisé en ce que la connexion libérable est un couplage libérable (39) qui peut être libéré au moyen d'une commande à distance pendant un fonctionnement de l'appareil.

5. Appareil de compensation de vibrations selon la revendication 1, caractérisé en ce que chaque corps rotatif (122, 123) de la première unité de compensation et chaque corps rotatif (24, 25) de la seconde unité de compensation sont entraînés par un moteur d'entraînement respectif (128, 129, 130, 131).

6. Appareil de compensation de vibrations selon l'une quelconque des revendications précédentes, caractérisé en ce que les corps rotatifs (22, 23, 24, 25 ; 122, 123, 124, 125) des deux unités de compensation sont agencés dans un logement commun (1 ; 101).

7. Appareil de compensation de vibrations selon l'une quelconque des revendications précédentes, caractérisé en ce que les corps rotatifs de chaque unité de compensation sont déplacés axialement de telle sorte que les corps rotatifs agencés de manière diagonale (22, 24 ; 23, 25) sont agencés dans le même plan, et en ce que les axes (58, 59 ; 60, 61) de chaque unité de compensation sont espacés l'un de l'autre, de sorte que les corps rotatifs (22, 23, 24, 25) balaient une zone commune lorsque vus suivant une direction axiale.

8. Appareil de compensation de vibrations selon l'une quelconque des revendications précédentes, caractérisé en ce que chaque unité de compensation (22, 23 ; 24, 25; 122, 123 ; 124, 125) comprend un capteur (40, 41, 42, 43 ; 140, 141, 142, 143) pour chaque moteur d'entraînement (29, 30; 128, 129, 130, 131) entraînant les corps rotatifs de ceux-ci, chaque capteur détectant la position et la vitesse angulaire des ou du corps rotatif entraînés par ledit moteur d'entraînement, chaque unité de compensation comprenant en outre un capteur de vitesse (54, 55 ; 164, 165, 166, 167) pour mesurer de manière continue la vitesse du au moins un moteur d'entraînement ou des ou du corps rotatif entraîné par celui-ci.
